# EUROPÄISCHE PATENTANMELDUNG

(11) **EP 0 592 841 A1**
(43) Veröffentlichungstag der Anmeldung: **20.04.1994**
(21) Anmeldenummer: 93115053.6
(22) Anmeldetag: 18.09.1993
(51) Int. Cl.: B23K 7/00

(54) **Verfahren zum autogenen Brennschneiden mit flüssigem Sauerstoff**

(30) Priorität: 13.10.1992 DE 4234438
(71) Anmelder: MESSER GRIESHEIM GMBH, D-60314 Frankfurt (DE)
(72) Erfinder: Grohmann, Paul, A-2372 Giesshübl (AT)

(57) **Zusammenfassung**

Beim autogenen Brennschneiden mit flüssigem Sauerstoff wird der Sauerstoff durch ein kryogenes Medium, vorzugsweise flüssiger Stickstoff, so abgekühlt, daß der auf die Schneidstelle treffende Flüssigsauerstoffstrahl (20) eine Temperatur aufweist, die unter der Siedetemperatur des Sauerstoffs bei Umgebungsdruck liegt. Dies erfordert die Bereitstellung und den Einsatz von zwei unterschiedlichen kryogenen Medien. Zwecks Vermeidung dieses Aufwandes erfolgt die Abkühlung durch flüssigen Sauerstoff, dessen Druck niedriger ist als der Druck des zum Brennschneiden verwendeten flüssigen Sauerstoffes. Der Druck liegt bevorzugt unterhalhalb des Umgebungsdruckes.

## Beschreibung

Die Erfindung betrifft ein Verfahren zum autogenen Brennschneiden mit flüssigem Sauerstoff nach dem Oberbegriff des Anspruches 1.

Aus der DE-PS 38 27 417 ist ein Verfahren zum autogenen Brennschneiden mit flüssigem Sauerstoff bekannt, bei dem der flüssige Sauerstoff auf einen hohen Druck gebracht wird und durch ein kryogenes Medium soweit abgekühlt wird, daß der aus der Schneiddüse austretende tiefkalte Flüssigsauerstoffstrahl eine Temperatur aufweist, die unter der Siedetemperatur des Sauerstoffs bei Umgebungsdruck liegt. Als kryogenes Medium wird flüssiger Stickstoff verwendet. Diese Unterkühlung des flüssigen Sauerstoffs ist notwendig, damit nach der Entspannung in der Düse eine Gasbildung vermieden wird und ein scharfgebündelter Strahl austritt. Da flüssiger Stickstoff einen niedrigeren Siedepunkt hat als flüssiger Sauerstoff ist er als Kühlmedium gut geeignet. Die Kühlung kann sowohl vor der Druckerhöhungspumpe im Niederdruckbereich oder auch nach Verlassen der Pumpe im Hochdruckbereich erfolgen. Es kann auch beides miteinander kombiniert werden. Die Unterkühlung im Niederdruckbereich hat den zusätzlichen Vorteil, daß eine Gasbildung in der Druckerhöhungspumpe vermieden wird.

Einige technische Daten zur Unterkühlung von Flüssigsauerstoff mit Flüssigstickstoff:
Die Siedetemperatur des Sauerstoffes bei Normaldruck beträgt -183°C. Im Bereich von Speicherbehälter bis zur Druckerhöhungspumpe liegt der Sauerstoff in einem Druckbereich von 3 bis 6 bar und einer Temperatur von -162 bis 171°C vor. Nach Abzug aus dem Speicherbehälter wird der Sauerstoff in einem Wärmeaustauscher durch Stickstoff auf -193 bis -195°C gekühlt, d.h. 22 bis 33°C unterkühlt. Durch die anschließende Druckerhöhung beispielsweise auf 400 bar, die Wandreibung und den Wärmeeinfall wird die Temperatur des flüssigen Sauerstoffs wieder um 15 bis 20° C auf etwa -175°C angehoben.

Im nachgeschalteten Hochdruckkühler (Hochdruckschlauch- und Brennerbegleitkühlung) wird der flüssige Sauerstoff um weitere 5 bis 10°C gekühlt. Ein Teil der durch die Pumpe zugeführten Wärmemenge ist reversibel. Sie wird durch die Entspannung in der Schneiddüse wieder frei. Bei der Entspannung von 400 bar auf Umgebungsdruck handelt es sich hierbei um ca.8°C. Somit entsteht ein Flüssigsauerstoffstrahl mit einer Temperatur von -188 bis -193°C, also 5 bis 10°C unter seinem Siedepunkt bei Umgebungsdruck.

Mit diesem Verfahren läßt sich zwar die angestrebte Erhöhung der Schneidgeschwindigkeit erreichen. Für die Kühlung ist jedoch ein eigener Speicherbehälter für den flüssigen Stickstoff einschließlich des Rohrleitungs- und Regelsystems erforderlich. Dies erfordert zusätzlichen Platz, der besonders im Bereich der Brennschneidmaschinen oft nur schwer zu realisieren ist.

Der Erfindung liegt daher die Aufgabe zugrunde, ein Verfahren zum autogenen Brennschneiden mit flüssigem Sauerstoff zu schaffen, bei dem ein zweites kryogenes Medium neben dem flüssigen Sauerstoff zur Abkühlung des flüssigen Sauerstoffes nicht erforderlich ist.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Die Erfindung geht demnach von der Überlegung aus, daß die Gleichgewichtstemperatur von flüssigem Sauerstoff vom Umgebungsdruck abhängig ist. Beim Umgebungsdruck von 1 bar beträgt sie -183°C und sinkt bei Druckabsenkung ab. Erfindungsgemäß wird daher der Hochdrucksauerstoff durch Wärmeaustausch mit Sauerstoff unter niedrigem Druck im erforderlichen Ausmaß unterkühlt. Es ist daher kein zusätzliches kryogenes Medium, insbesondere flüssiger Stickstoff, erforderlich, um diese Abkühlung durchzuführen. Für die Kühlung und Unterkühlung des flüssigen Schneidsauerstoffs durch die Eigenmediumkühlung gemäß der Erfindung müssen lediglich folgende Bedingungen eingehalten werden:
Der Sauerstoff, welcher als Kühlmedium dient, muß drucklos oder bevorzugt im Unterdruckbereich vorliegen. Außerdem muß der Wärmeaustauscher ausreichend groß dimensioniert werden.

Der Unterdruck wird vorzugsweise mit einer Luftstrahlpumpe erzeugt. Aus den eingangs genannten Gründen ist es auch bei dem erfindungsgemäßen Verfahren vorteilhaft, wenn die Abkühlung des Schneidsauerstoffs sowohl vor als auch nach seiner Druckerhöhung vorgenommen wird.

Ein besonderer Vorteil des erfindungsgemäßen Verfahrens besteht darin, daß mit der Schneidmaschine keine große Kühleinrichtung mitbewegt werden muß. Der zur Kühlung verwendete verdampfte Sauerstoff kann komprimiert werden und in ein vorhandenes Rohrleitungsnetz zwecks Weiterverwendung eingespeist werden.

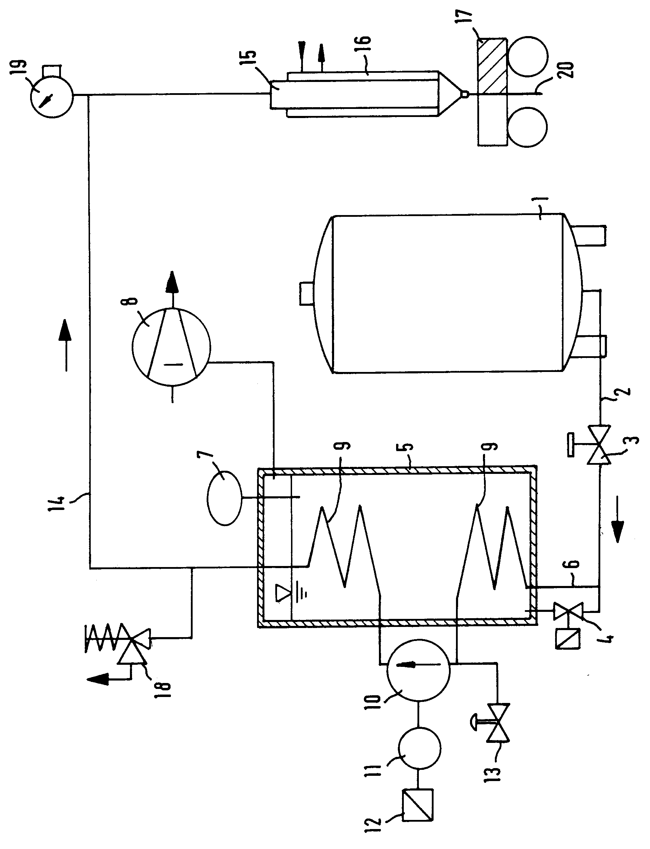

Die Zeichnung veranschaulicht ein Ausführungsbeispiel der Erfindung in schematischer Form.

Flüssiger Sauerstoff aus dem Speicherbehälter 1 gelangt durch die vakuumisolierte Rohrleitung 2, das Absperrventil 3 und das Füllstandserfassungssystem 4 in den Wärmeaustauscher 5. Von der vakuumisolierten Leitung 2 wird hinter dem Absperrventil 3 durch die Leitung 6 der zum Brennschneiden bestimmte flüssige Sauerstoff abgezweigt und ebenfalls in den Wärmeaustauscher 5 geleitet. Das Füllstandserfassungssystem 4 hält den zur Kühlung dienenden flüssigen Sauerstoff im Wärmeaustauscher 5 automatisch auf dem gewünschten Niveau, wozu mittels des Fühlers 7 der Flüssigkeitsstand erfaßt wird.

Im Innern des Wärmeaustauschers 5 wird mittels der Luftstrahlpumpe 8 ein Unterdruck bis zu 0,1 bar absolut erzeugt. Hierdurch wird die Siedetemperatur des flüssigen Sauerstoffs im Wärmeaustauscher 5 um bis zu 17°C gesenkt, so daß er als Kühlmedium für den Schneidsauerstoff dienen kann. Durch die Wahl des Unterdruckes kann die Temperaturdifferenz des Kühlsauerstoffs zum Schneidsauerstoff und somit die Größe des Wärmeaustauschers bestimmt werden.

Der zum Brennschneiden bestimmte, unter 3 bis 6 bar Tankdruck stehende Sauerstoff wird in Kupferwendeln 9 durch den Wärmeaustauscher 5 geführt und dabei von dem ihn umgebenden Kühlsauerstoff je nach vorliegendem Druckverhältnis um 12 bis 38°C unter seine Siedetemperatur gekühlt. In diesem Zustand wird der Schneidsauerstoff mittels der Hochdruckkolbenpumpe 10 auf einen Druck zwischen 200 und 500 bar gebracht. Falls gewünscht, können jedoch auch noch höhere Drücke angewendet werden. Die Hochdruckkolbenpumpe 10 wird durch einen Elektromotor 11 angetrieben, welcher durch einen Frequenzumformer 12 gesteuert wird. Als Pumpe kann auch eine Tauchkolbenpumpe verwendet werden, deren Pumpenkopf direkt in der Flüssigkeit angeordnet wird.

Zum schnellen Einsatz der Anlage bei Betriebsbeginn wird über ein vorzugsweise elektropneumatisch betriebenes Ventil 13 die Anlage kaltgefahren, indem man genügend lange Sauerstoff durch das Ventil 13 auströmen läßt.

Nach der Druckerhöhung mittels der Hochdruckkolbenpumpe 10 wird der flüssige Schneidsauerstoff zurück in den Wärmeaustauscher 5 geleitet, um die durch die Hochdruckkolbenpumpe 10 eingetragene Wärme, welche durch Druckerhöhung und Reibung entstanden ist, zu kompensieren. Danach gelangt der Schneidsauerstoff durch die vakuumisolierte Hochdruckleitung 14 in den Brenner 15, der von einer Isolation und einem Wasserkühlmantel 16 umgeben ist, um ihn gegen die hohe Wärmeabstrahlung durch die zu schneidende Bramme 17 zu schützen.

Zur Sicherheit gegen Überdruck ist die Anlage mit einem Sicherheitsventil 18 und einem Manometer 19 mit Grenzwertgeber ausgerüstet. Der Schneidsauerstoff verläßt den Brenner 15, indem er in einer speziellen Hochdruckdüse entspannt wird. Es entsteht ein scharfgebündelter, energiereicher Sauerstoffstrahl 20.

## Patentansprüche

1. Verfahren zum autogenen Brennschneiden mit flüssigem Sauerstoff, bei dem der Sauerstoff in flüssiger Form auf einen hohen Druck gebracht so, als Flüssigsauerstoffstrahl (2) der Schneidstelle zugeführt und durch ein kryogenes Medium so abgekühlt wird, daß der Flüssigsauerstoffstrahl eine Temperatur aufweist, die unter der Siedetemperatur des Sauerstoffs bei Umgebungsdruck liegt,
dadurch gekennzeichnet,
daß die Abkühlung durch flüssigen Sauerstoff im Siedezustand erfolgt, dessen Druck niedriger ist als der Druck des zum Brennschneiden verwendeten flüssigen Sauerstoffs.

2. Verfahren nach Anspruch 1,
dadurch gekennzeichnet,
daß der zur Kühlung dienende flüssige Sauerstoff unter einem Druck unterhalb des Umgebungsdruckes steht.

3. Verfahren nach Anspruch 2,
dadurch gekennzeichnet,
daß der Unterdruck mittels einer Luftstrahlpumpe (8) erzeugt wird.

4. Verfahren nach einem der Ansprüche 1 bis 3,
dadurch gekennzeichnet,
daß die Abkühlung des Schneidsauerstoffs sowohl vor als auch nach seiner Druckerhöhung vorgenommen wird.
